(19) Europäisches Patentamt
European Patent Office
Office européen des brevets

(11) **EP 4 339 245 A1**

(12) **EUROPEAN PATENT APPLICATION**
published in accordance with Art. 153(4) EPC

(43) Date of publication:
**20.03.2024 Bulletin 2024/12**

(21) Application number: **22807172.6**

(22) Date of filing: **16.03.2022**

(51) International Patent Classification (IPC):
*C08L 77/06* (2006.01)   *C08G 69/26* (2006.01)
*C08K 3/01* (2018.01)   *C08K 3/013* (2018.01)
*C08K 3/04* (2006.01)   *C08K 7/06* (2006.01)
*C08K 7/14* (2006.01)

(52) Cooperative Patent Classification (CPC):
**C08G 69/26; C08K 3/01; C08K 3/013; C08K 3/04;
C08K 7/06; C08K 7/14; C08L 77/06**

(86) International application number:
**PCT/JP2022/011810**

(87) International publication number:
**WO 2022/239466 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.05.2021 JP 2021080950**

(71) Applicant: **MITSUBISHI GAS CHEMICAL
COMPANY, INC.**
**Chiyoda-ku
Tokyo 100-8324 (JP)**

(72) Inventors:
• **SHIMADA NAKAMURA Jin**
**Hiratsuka-shi, Kanagawa 254-0016 (JP)**
• **KANEKO Naoki**
**Hiratsuka-shi, Kanagawa 254-0016 (JP)**
• **MIYABE Takanori**
**Hiratsuka-shi, Kanagawa 254-0016 (JP)**
• **ODA Takafumi**
**Hiratsuka-shi, Kanagawa 254-0016 (JP)**

(74) Representative: **Vossius & Partner
Patentanwälte Rechtsanwälte mbB
Siebertstrasse 3
81675 München (DE)**

(54) **RESIN COMPOSITION AND MOLDED ARTICLE**

(57) Provided are a resin composition containing a xylylenediamine-based polyamide resin, which has a short half crystallization time, is capable of effectively suppressing a decrease in Charpy impact strength, and further has small temperature dependence of half crystallization time, and a molded product formed from the resin composition. A resin composition containing a polyamide resin, a reinforcing material, and an inorganic crystallization nucleating agent,
wherein the polyamide resin contains a xylylenediamine-based polyamide resin containing diamine-derived structural units and dicarboxylic acid-derived structural units, 70 mol% or greater of the diamine-derived structural units being derived from a xylylenediamine, and 70 mol% or greater of the dicarboxylic acid-derived structural units being derived from an $\alpha,\omega$-linear aliphatic dicarboxylic acid having from 4 to 20 carbon atoms;
the inorganic crystallization nucleating agent has an area measured according to a specific surface area measurement method (BET method) of greater than $8.0\,m^2/g$; and
a content of the inorganic crystallization nucleating agent is 2.0 mass% or greater of the resin composition.

**Description**

Technical Field

The present invention relates to a resin composition and a molded product.

Background Art

Polyamide resins are widely used as engineering plastics excelling in mechanical strength such as impact resistance, friction resistance and wear resistance and also excelling in heat resistance and oil resistance in the fields of automobile components, electronic and electrical equipment components, OA equipment components, mechanical components, building materials and housing related components, and the like.

Many types of polyamide resins, such as polyamide 6 and polyamide 66, are known. Polyamide resins produced from xylylenediamine and a linear aliphatic dicarboxylic acid such as adipic acid or sebacic acid and represented by meta-xylylene adipamide (hereinafter also referred to as "MXD6") have aromatic rings in the main chain unlike polyamide 6 and polyamide 66, have high rigidity, low water absorption rate, and excellent oil resistance, are suitable for precision molding because of small molding shrinkage and small sink and warpage in molding, and are positioned as extremely excellent polyamide resins. For these reasons, polyamide resins, such as MXD6, produced from xylylenediamine and a linear aliphatic dicarboxylic acid have been increasingly widely used in recent years as molding materials, particularly injection-molding materials, in various fields such as electronic and electrical equipment components, transport machine components such as automobile components, general machine components, precision machine components, leisure sports goods, and civil engineering and construction members.

However, the crystallization rate of a polyamide resin produced from xylylenediamine and a linear aliphatic dicarboxylic acid is lower than that of polyamide 6 or polyamide 66. Therefore, such a polyamide resin alone tends to be hardly crystallized in a mold during injection molding.

On the other hand, as a method for increasing the crystallization rate of a polyamide resin, for example, methods described in Patent Documents 1 to 3 are known. With such methods, the half crystallization time is shortened and the half crystallization rate is increased.

Citation List

Patent Documents

     Patent Document 1: WO 2019/155982
     Patent Document 2: JP 2017-14387 A
     Patent Document 3: WO 2012/046629

Summary of Invention

Technical Problem

Here, as described in Patent Document 3, as a method for shortening the half crystallization time of a polyamide resin produced from xylylenediamine and a linear aliphatic dicarboxylic acid, it is known to blend an inorganic crystallization nucleating agent such as talc. However, when an inorganic crystallization nucleating agent is blended, the Charpy impact strength tends to be decreased. Furthermore, as a result of studies by the present inventors, it has been found that the half crystallization time varies depending on the measurement temperature. A large difference in half crystallization time depending on the temperature, for example, causes occurrence of mold temperature unevenness at locations (inside and outside) of the mold in the case of injection molding, or occurrence of temperature unevenness of the mold temperature itself in continuous molding. In addition, a difference in half crystallization time at different mold temperatures causes occurrence of a variation in degree of progress of crystallization for each molded product, which may contribute to instability of physical properties.

An object of the present invention is to provide a resin composition containing xylylenediamine-based polyamide resin that has a short half crystallization time, is capable of effectively suppressing a decrease in Charpy impact strength, and further has small temperature dependence of the half crystallization time, and to provide a molded product formed from the resin composition.

Solution to Problem

As a result of studies conducted by the present inventors based on the above-mentioned problems, the problem is solved by blending, in a xylylenediamine-based polyamide resin, a prescribed amount or greater of an inorganic crystallization nucleating agent having an area measured according to a specific surface area measurement method (BET method) of greater than 8.0 $m^2/g$.

Specifically, the problems described above are solved by the following solutions.

<1> A resin composition containing a polyamide resin, a reinforcing material, and an inorganic crystallization nucleating agent,

wherein the polyamide resin contains a xylylenediamine-based polyamide resin containing diamine-derived structural units and dicarboxylic acid-derived structural units, 70 mol% or greater of the diamine-derived structural units being derived from xylylenediamine, and 70 mol% or greater of the dicarboxylic acid-derived structural units being derived from an $\alpha,\omega$-linear aliphatic dicarboxylic acid having from 4 to 20 carbon atoms;
the inorganic crystallization nucleating agent has an area measured according to a specific surface area measurement method (BET method) of greater than 8.0 $m^2/g$; and
a content of the inorganic crystallization nucleating agent is 2.0 mass% or greater of the resin composition.

<2> The resin composition according to <1>, wherein the reinforcing material contains a glass fiber and/or a carbon fiber.
<3> The resin composition according to <1> or <2>, wherein the content of the inorganic crystallization nucleating agent is 5.0 mass% or greater of the resin composition.
<4> The resin composition according to any one of <1> to <3>, wherein the xylylenediamine contains from 10 to 70 mol% of para-xylylenediamine and from 90 to 30 mol% of meta-xylylenediamine (provided that the total of para-xylylenediamine and meta-xylylenediamine does not exceed 100 mol%).
<5> The resin composition according to any one of <1> to <4>, wherein the content of the inorganic crystallization nucleating agent is 10.0 mass% or less of the resin composition.
<6> The resin composition according to any one of <1> to <5>, wherein a difference between a half crystallization time of the resin composition at a measurement temperature of 110°C and a half crystallization time of the resin composition at a measurement temperature of 150°C as measured according to a depolarization intensity method is 20.0 seconds or less.
<7> A molded product formed from the resin composition described in any one of <1> to <6>.

Advantageous Effects of Invention

It is possible to provide a resin composition containing xylylenediamine-based polyamide resin that has a short half crystallization time, is capable of effectively suppressing a decrease in Charpy impact strength despite having an inorganic crystallization nucleating agent blended therein, and further has small temperature dependence of the half crystallization time, and to provide a molded product formed from the resin composition.

Description of Embodiments

Hereinafter, embodiments for carrying out the present invention (referred to simply as "the present embodiments" below) will be described in detail. Note that the following embodiments are examples for describing the present invention, and the present invention is not limited to these embodiments.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

When a measurement method or the like of a standard set forth in the present specification differs depending on the year, it is based on the standard as of January 1, 2021 unless otherwise stated.

A resin composition of the present embodiment is characterized by containing a polyamide resin, a reinforcing material, and an inorganic crystallization nucleating agent, and also characterized in that the polyamide resin contains a xylylenediamine-based polyamide resin which contains diamine-derived structural units and dicarboxylic acid-derived structural units, that 70 mol% or greater of the diamine-derived structural units are derived from xylylenediamine, and that 70 mol% or greater of the dicarboxylic acid-derived structural units are derived from an $\alpha,\omega$-linear aliphatic dicarboxylic acid having from 4 to 20 carbon atoms; in that an area of the inorganic crystallization nucleating agent measured according to a specific surface area measurement method (BET method) is greater than 8.0 m$^2$/g; and in that a content of the inorganic crystallization nucleating agent is 2.0 mass% or greater of the resin composition.

With such a constitution, as for the resin composition containing the xylylenediamine-based polyamide resin having a long half crystallization time, the half crystallization time can be shortened, and a decrease in Charpy impact strength can be effectively suppressed. That is, it is presumed that the half crystallization time is shortened by increasing the content of the inorganic crystallization nucleating agent as compared with known cases. In addition, it is presumed that the use of an inorganic crystallization nucleating agent having a large area measured according to the specific surface area measurement method (BET method) can effectively suppress a decrease in Charpy impact strength even when the amount of the inorganic crystallization nucleating agent added is increased. In addition, it is presumed that the temperature dependence of the half crystallization time could be reduced by blending an inorganic crystallization nucleating agent having a large area measured according to the specific surface area measurement method (BET method) in an amount larger than that in known cases. Therefore, even if temperature unevenness occurs during molding of the resin composition, the degree of crystallinity in the molded product can be kept constant, and the physical properties of the molded product tend to be relatively stable. In addition, the resin composition has a small difference in crystallization rate (half crystallization time) at different mold temperatures, and thus, even if the mold temperature varies, the variation in degree of progress of crystallization can be reduced, which contributes to the stability of the physical properties of the molded product.

The resin composition according to the present embodiment can have an increased degree of crystallinity.

The details of the present embodiments will be described below.

Polyamide Resin

The resin composition of the present embodiment contains a xylylenediamine-based polyamide resin which contains diamine-derived structural units and dicarboxylic acid-derived structural units, 70 mol% or greater of the diamine-derived structural units are derived from xylylenediamine, and 70 mol% or greater of the dicarboxylic acid-derived structural units are derived from an α,ω-linear aliphatic dicarboxylic acid having from 4 to 20 carbon atoms. In the present embodiment, the use of the xylylenediamine-based polyamide resin makes it possible to produce a molded product utilizing the performances inherently possessed by the xylylenediamine-based polyamide resin, including high rigidity, low water absorption rate, oil resistance, small molding shrinkage, small sink and small warpage.

The xylylenediamine-based polyamide resin used in the present embodiment contains diamine-derived structural units and dicarboxylic acid-derived structural units, 70 mol% or greater of the diamine-derived structural units are derived from xylylenediamine, and 70 mol% or greater of the dicarboxylic acid-derived structural units are derived from an α,ω-linear aliphatic dicarboxylic acid having from 4 to 20 carbon atoms.

In the xylylenediamine-based polyamide resin used in the present embodiment, preferably 80 mol% or greater, more preferably 90 mol% or greater, even more preferably 95 mol% or greater, and still more preferably 99 mol% or greater of the diamine-derived structural units are derived from xylylenediamine (preferably para-xylylenediamine and/or meta-xylylenediamine).

In the present embodiment, the diamine-derived structural units preferably contain from 10 to 70 mol% of para-xylylenediamine and from 90 to 30 mol% of meta-xylylenediamine (the total of para-xylylenediamine and meta-xylylenediamine does not exceed 100 mol%), more preferably contain from 10 to 60 mol% of para-xylylenediamine and from 90 to 40 mol% of meta-xylylenediamine, and more preferably contain from 40 to 60 mol% of para-xylylenediamine and from 60 to 40 mol% of meta-xylylenediamine. Within such ranges, the half crystallization time can be further shortened, and the temperature dependence of the half crystallization time can also be further reduced. In addition, from the viewpoint of moldability, the diamine-derived structural units contain from 25 to 35 mol% of para-xylylenediamine and from 75 to 65 mol% of meta-xylylenediamine.

Examples of diamines besides xylylenediamine that can be used as raw material diamine components of the xylylenediamine-based polyamide resin include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having aromatic ring(s), such as bis(4-aminophenyl)ether, p-phenylenediamine, and bis(aminomethyl)naphthalene. One type thereof can be used, or two or more types thereof can be mixed and used.

In the xylylenediamine-based polyamide resin used in the present embodiment, preferably 75 mol% or greater, more preferably 85 mol% or greater, even more preferably 95 mol% or greater, and still more preferably 99 mol% or greater of the dicarboxylic acid-derived structural unit are derived from an α,ω-linear aliphatic dicarboxylic acid having from 4 to 20 carbon atoms (preferably adipic acid and/or sebacic acid, and more preferably sebacic acid).

The α,ω-linear aliphatic dicarboxylic acid having from 4 to 20 carbon atoms is preferably an α,ω-linear aliphatic dicarboxylic acid having from 4 to 12 carbon atoms, more preferably an α,ω-linear aliphatic dicarboxylic acid having from 6 to 12 carbon atoms, and even more preferably an α,ω-linear aliphatic dicarboxylic acid having from 8 to 12 carbon atoms.

Examples of the α,ω-linear aliphatic dicarboxylic acid having from 4 to 20 carbon atoms can include aliphatic dicarboxylic acids such as succinic acid, glutaric acid, pimelic acid, suberic acid, azelaic acid, adipic acid, sebacic acid, undecanedioic acid, and dodecanedioic acid. Adipic acid and/or sebacic acid are even more preferable, and sebacic acid is still more preferable. One type of α,ω-linear aliphatic dicarboxylic acid having from 4 to 20 carbon atoms can be used, or two or more types thereof can be mixed and used.

Examples of the dicarboxylic acid component other than the α,ω-linear aliphatic dicarboxylic acid having from 4 to 20 carbon atoms include phthalic acid compounds, such as isophthalic acid, terephthalic acid, and orthophthalic acid; naphthalene dicarboxylic acid isomers, such as 1,2-naphthalene dicarboxylic acid, 1,3-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, and 2,7-naphthalene dicarboxylic acid. One type thereof can be used, or two or more types thereof can be mixed and used.

A preferred first embodiment of the xylylenediamine-based polyamide resin is a polyamide resin in which 70 mol% or greater of the diamine-derived structural units are derived from xylylenediamine, 70 mol% or greater (preferably 80 mol% or greater, and more preferably 90 mol% or greater) of the dicarboxylic acid-derived structural units are derived from adipic acid, and 60 mol% or greater (preferably 80 mol% or greater, and more preferably 90 mol% or greater) of xylylenediamine-derived structural units are meta-xylylenediamine-derived structural units.

A preferred second embodiment of the xylylenediamine-based polyamide resin is a polyamide resin in which 70 mol% or greater (preferably 80 mol% or greater, and more preferably 90 mol% or greater) of the diamine-derived structural units are derived from xylylenediamine, 70 mol% or greater (preferably 80 mol% or greater, and more preferably 90 mol% or greater) of the dicarboxylic acid-derived structural units are derived from sebacic acid, from 40 to 90 mol% of the xylylenediamine-derived structural units are meta-xylylenediamine-derived structural units, and from 60 to 10 mol% thereof are para-xylylenediamine-derived structural units.

The resin composition of the present embodiment preferably contains the xylylenediamine-based polyamide resin of the second embodiment.

Note that the xylylenediamine-based polyamide resin contains diamine-derived structural units and dicarboxylic acid-derived structural units as main components, but does not entirely exclude structural units other than these, and of course, the xylylenediamine-based polyamide resin may contain a structural unit derived from a lactam such as ε-caprolactam or laurolactam, or from an aliphatic aminocarboxylic acid such as aminocaproic acid and aminoundecanoic acid. Here, the term "main component" indicates that, of the structural units constituting the xylylenediamine-based polyamide resin, the total number of the diamine-derived structural units and the dicarboxylic acid-derived structural units is the largest among all the structural units. In the present embodiment, the total of the diamine-derived structural units and the dicarboxylic acid-derived structural units in the xylylenediamine-based polyamide resin accounts for preferably 90 mol% or greater and more preferably 95 mol% or greater of all the structural units, and further may be 98 mol% or greater, 99 mol% or greater, or 100 mol%.

The resin composition of the present embodiment may, or may not, contain a polyamide resin other than the xylylenediamine-based polyamide resin. The other polyamide resin may be an aliphatic polyamide resin or a semi-aromatic polyamide resin, and is preferably an aliphatic polyamide resin.

Examples of the aliphatic polyamide resin include polyamide 6, polyamide 66, polyamide 11, polyamide 12 and the like, and polyamide 66 is preferable.

Examples of semi-aromatic polyamide resins include polyamide 6T, polyamide 9T, polyamide 10T, polyamide 6I, polyamide 9I, polyamide 6T/6I, and polyamide 9T/9I.

The content of the polyamide resin other than the xylylenediamine-based polyamide resin in the resin composition of the present embodiment is preferably 10 parts by mass or less and more preferably 8 parts by mass or less, and may be 6 parts by mass or less, 3 parts by mass or less, or 1 part by mass or less when the total amount of the polyamide resins is 100 parts by mass. The lower limit value of the content of the other polyamide resin may be 0 parts by mass. Especially, the resin composition according to the present embodiment may contain no polyamide 66. Also, the resin composition according to the present embodiment may contain no polyamide 6.

The resin composition of the present embodiment contains the polyamide resin (preferably the xylylenediamine-based polyamide resin) in a proportion of preferably 25 mass% or greater, more preferably 30 mass% or greater, even more preferably 35 mass% or greater, still more preferably 40 mass% or greater, even still more preferably 50 mass% or greater, and yet even still more preferably 55 mass% or greater of the resin composition. The upper limit value of the content of the polyamide resin is preferably 90 mass% or less, and more preferably 80 mass% or less.

Only one type of polyamide resin may be contained, or two or more types of polyamide resins may be contained. When two or more types are contained, the total amount is preferably in the above range.

Reinforcing material

The resin composition according to the present embodiment contains a reinforcing material. The inclusion of the reinforcing material can improve the mechanical strength of the obtained molded product. In the present invention, the reinforcing material of the present embodiment corresponding to the inorganic crystallization nucleating agent is an inorganic crystallization nucleating agent.

The reinforcing material that can be used and contained in the resin composition of the present embodiment has an effect of improving the mechanical properties of the obtained resin composition when blended in the resin, and can be a commonly used reinforcing material for plastics. The reinforcing material may be an organic reinforcing material or an inorganic reinforcing material, but is preferably an inorganic reinforcing material. As the reinforcing material, a fibrous reinforcing material such as glass fiber, carbon fiber, basalt fiber, wollastonite or potassium titanate fiber can be preferably used. It is also possible to use particulate or amorphous reinforcing materials such as titanium oxide, feldspar minerals, clay, organically modified clay, and glass beads; and scale-shaped reinforcing materials such as glass flakes and graphite.

In the present embodiment, among the above reinforcing materials, from the viewpoint of mechanical strength, rigidity, and heat resistance, a fibrous reinforcing material is preferably contained, a glass fiber and/or a carbon fiber is more preferably contained, and a glass fiber is even more preferably contained. The fibrous reinforcing filler may have a round cross-sectional shape or a modified cross-sectional shape.

The reinforcing material is more preferably surface-treated with a surface treatment agent such as a coupling agent. In particular, a glass fiber to which a surface treatment agent is attached is preferable because it is excellent in durability, moist heat resistance, hydrolysis resistance, and heat shock resistance.

The glass fiber contains a glass composition such as A glass, C glass, E glass, S glass, R glass, M glass, or D glass, and E glass (non-alkaline glass) is particularly preferable.

The term glass fiber refers to a fiber having a perfect circular or polygonal cross-sectional shape when the fiber is cut at an angle perpendicular to the length direction and having a fibrous appearance.

The glass fiber used in the resin composition of the present embodiment may be a single fiber or a fiber obtained by intertwining a plurality of single fibers.

The form of the glass fiber may be any of "glass roving" in which a single fiber or a fiber obtained by intertwining a plurality of single fibers is continuously wound, "chopped strand" cut to uniform lengths of from 1 to 10 mm, and "milled fiber" crushed to a length of from 10 to 500 um. Such glass fibers are commercially available from Asahi Fiber Glass Co., Ltd. under the trade names of "Glaslon Chopped Strand" and "Glaslon Milled Fiber", and are easily available. Glass fibers of different forms may be used in combination.

The glass fiber used in the present embodiment may have a circular cross section or a non-circular cross section. The use of the glass fiber having a non-circular cross section can more effectively suppress the warpage of the obtained molded product. In addition, in the present embodiment, warpage can be effectively suppressed also when glass fibers having a circular cross-section are used.

In addition, the content of the reinforcing material in the resin composition of the present embodiment is, per 100 parts by mass of the polyamide resin, 10 parts by mass or greater, preferably 20 parts by mass or greater, more preferably 30 parts by mass or greater, and even more preferably 40 parts by mass or greater. The upper limit value is, per 100 parts by mass of the polyamide resin, preferably 120 parts by mass or less, more preferably 110 parts by mass or less, even more preferably 90 parts by mass or less, still more preferably 70 parts by mass or less, and even still more preferably 60 parts by mass or less.

The content of the reinforcing material in the resin composition of the present embodiment is preferably 20 mass% or greater, and more preferably 25 mass% or greater of the resin composition. The upper limit value is preferably 70 mass% or less, more preferably 65 mass% or less, even more preferably 60 mass% or less, and still more preferably 50 mass% or less, and may be 40 mass% or less.

The resin composition of the present embodiment may contain only one type of reinforcing material, or may contain two or more types of reinforcing materials. When two or more types are contained, the total amount is in the above range. Note that the content of the reinforcing material in the present embodiment includes the amounts of the sizing agent and the surface treatment agent.

Inorganic crystallization nucleating agent

The resin composition of the present embodiment contains an inorganic crystallization nucleating agent having an area measured according to the specific surface area measurement method (BET method) of greater than 8.0 $m^2/g$, in a proportion of 2.0 mass% or greater of the resin composition. The BET method in the present embodiment is a method in which measurement is performed by a BET method based on low-temperature and low-humidity physical adsorption of an inert gas. It is presumed that, with such a constitution, in the resin composition containing the xylylenediamine-based polyamide resin having a long half crystallization time, the half crystallization time can be shortened, and that a decrease in Charpy impact strength can be effectively suppressed. Furthermore, it is presumed that the use of the inorganic crystallization nucleating agent having an area measured according to the specific surface area measurement method (BET method) of greater than 8.0 m$^2$/g can also increase the degree of crystallinity of the molded product. That is, it is presumed that not only the crystallization rate of the resin composition is increased but also the degree of crystallinity of the obtained molded product tends to be increased. This point is confirmed by the fact that the Δ softening temperature of Examples which will be described later is large.

The area of the inorganic crystallization nucleating agent used in the present embodiment as measured according to the specific surface area measurement method (BET method) is greater than 8.0 m$^2$/g, preferably 9.0 m$^2$/g or greater, more preferably 10.0 m$^2$/g or greater, even more preferably 15.0 m$^2$/g or greater, and still more preferably 20.0 m$^2$/g or greater, even still more preferably 25.0 m$^2$/g or greater, yet even still more preferably 30.0 m$^2$/g or greater, and particularly preferably 35.0 m$^2$/g or greater. By setting the area to the lower limit value or greater, the temperature dependence of the half crystallization time can be further reduced. In addition, the upper limit value of the area of the inorganic crystallization nucleating agent measured according to the specific surface area measurement method (BET method) is not particularly limited, and is, for example, practically 100.0 m$^2$/g or less, and the required performances are sufficiently satisfied even in the case of 60.0 m$^2$/g or less.

The material of the inorganic crystallization nucleating agent is not particularly limited as long as it is unmolten at the time of melt processing and can form a nucleus of a crystal in a cooling process, and examples thereof include graphite, molybdenum disulfide, barium sulfate, talc, calcium carbonate, sodium phosphate, mica, and kaolin. At least one type selected from talc and calcium carbonate is more preferable, and talc is still more preferable.

The inorganic crystallization nucleating agent is preferably particulate, and preferably has a particulate form with a particle size distribution (D50) of from 0.8 to 6.0 μm. The particle size distribution (D50) here means the diameter of the particle sizes at which the integrated value is 50%.

The content of the inorganic crystallization nucleating agent (preferably talc) is, per 100 parts by mass of the polyamide resin, preferably 1.3 parts by mass or greater, more preferably 2.5 parts by mass or greater, even more preferably 3.0 parts by mass or greater, and still more preferably 4.0 parts by mass or greater. The content is set to the lower limit value or greater, thereby making it possible to further shorten the half crystallization time of the resin composition, and to reduce the temperature dependence of the half crystallization time. Further, the content of the inorganic crystallization nucleating agent is, per 100 parts by mass of the polyamide resin, preferably 7.5 parts by mass or less, more preferably 7.0 parts by mass or less, even more preferably 6.0 parts by mass or less, still more preferably 5.5 parts by mass or less, and even still more preferably 4.5 parts by mass or less. When the content is set to the upper limit value or less, a decrease in Charpy impact strength tends to be more effectively suppressed.

The content of the inorganic crystallization nucleating agent (preferably talc) is 2.0 mass% or greater, preferably greater than 2.0 mass%, more preferably 3.5 mass% or greater, even more preferably 4.0 mass% or greater, and still more preferably 5.0 mass% or greater in the resin composition. The content is set to the lower limit value or greater, thereby making it possible to further shorten the half crystallization time of the resin composition, and to reduce the temperature dependence of the half crystallization time. The content of the inorganic crystallization nucleating agent is preferably 10.0 mass% or less, more preferably 9.0 mass% or less, even more preferably 8.0 mass% or less, still more preferably 7.0 mass% or less, and even still more preferably 6.0 mass% or less in the resin composition. When the content is set to the upper limit value or less, a decrease in Charpy impact strength tends to be more effectively suppressed.

The resin composition of the present embodiment may contain only one type of inorganic crystallization nucleating agent or may contain two or more types of inorganic crystallization nucleating agents. When two or more types are contained, the total amount thereof is preferably in the above range.

Other Components

The resin composition of the present embodiment may contain other components without departing from the scope of the present embodiment. Examples of such other components include thermoplastic resins other than polyamide resins, light stabilizers, antioxidants, mold release agents, heat stabilizers, flame retardants, flame retardant aids, ultraviolet absorbers, fluorescent brighteners, anti-dropping agents, antistatic agents, antifogging agents, anti-blocking agents, fluidity improvers, weatherability improvers, light resistance improvers, plasticizers, dispersants, and antibacterial agents. Only one type of these components may be used alone, or two or more types of these components may be used in combination. The content of these components is preferably 5 mass% or less of the resin composition of the present embodiment.

For these details, descriptions in paragraphs [0130] to [0155] of JP 4894982 B can be referred to, the contents of which are incorporated herein by reference.

In the resin composition of the present embodiment, the contents of the polyamide resin, the reinforcing material, and the inorganic crystallization nucleating agent, and other additives to be blended as necessary are adjusted so that the total content of the components is 100 mass%. In the resin composition of the present embodiment, the total content of the polyamide resin, the reinforcing material, and the inorganic crystallization nucleating agent accounts for preferably 90 mass% or greater, preferably 95 mass% or greater, and still more preferably 98 mass% or greater of the resin composition.

Physical properties of resin composition

In the resin composition of the present embodiment, the temperature dependence of the half crystallization time is preferably small. Specifically, the difference between a half crystallization time at a measurement temperature of 110°C and a half crystallization time at a measurement temperature of 150°C of the resin composition of the present embodiment, as measured according to a depolarization intensity method, is preferably 20.0 seconds or shorter, more preferably 16.0 seconds or shorter, even more preferably 13.0 seconds or shorter, still more preferably 11.0 seconds or shorter, even still more preferably 9.0 seconds or shorter, yet even still more preferably 8.0 seconds or shorter, and particularly still more preferably 5.5 seconds or shorter. The lower limit value is ideally 0 seconds, but practically 0.5 seconds or longer.

The resin composition according to the present embodiment preferably has a short half crystallization time at the measurement temperature of 110°C. Specifically, the half crystallization time of the resin composition of the present embodiment measured according to the depolarization intensity method at the measurement temperature of 110°C is preferably 25.0 seconds or shorter, more preferably 20.0 seconds or shorter, even more preferably 16.0 seconds or shorter, still more preferably 13.0 seconds or shorter, and even still more preferably 12.0 seconds or shorter. The lower limit value is preferably as low as possible, but is practically 1.0 second or longer.

The resin composition according to the present embodiment preferably has a short half crystallization time at the measurement temperature of 150°C. Specifically, the half crystallization time of the resin composition of the present embodiment measured according to the depolarization intensity method at the measurement temperature of 110°C is preferably 35.0 seconds or shorter, more preferably 32.0 seconds or shorter, even more preferably 28.0 seconds or shorter, still more preferably 25.0 seconds or shorter, and even still more preferably 18.0 seconds or shorter. The lower limit value is preferably as low as possible, but is practically 1.0 second or longer, or even 2.0 seconds or longer.

In the resin composition of the present embodiment, it is preferable that the difference between the softening temperature of the resin composition and the softening temperature of a resin composition obtained by excluding the crystallization nucleating agent from the resin composition and blending a xylylenediamine-based polyamide resin in an amount equal to the mass of the crystallization nucleating agent (hereinafter referred to as "crystallization nucleating agent-free resin composition") is large. It can be said that a larger difference between the softening temperatures indicates a higher degree of crystallinity of the obtained molded product.

Specifically, the difference between the softening temperature of the resin composition of the present embodiment and the softening temperature of the crystallization nucleating agent-free resin composition at the measurement temperature of 110°C is preferably 4.0°C or higher. A difference between the upper limit values of the softening temperatures is practically 15.0°C or lower.

In addition, the difference between the softening temperature of the resin composition of the present embodiment and the softening temperature of the crystallization nucleating agent-free resin composition at the measurement temperature of 150°C is preferably 5.0°C or higher. A difference between the upper limit values of the softening temperatures is practically 5.0°C or lower.

The resin composition of the present embodiment is preferably excellent in impact resistance. Specifically, the resin composition of the present embodiment is molded into an ISO test piece having a thickness of 4 mm, and the notched Charpy impact strength according to ISO-179 is preferably 6.0 kJ/m$^2$ or greater, and more preferably 7.0 kJ/m$^2$ or greater. The upper limit of the notched Charpy impact strength is not particularly limited, but is practically 15.0 kJ/m$^2$ or less, and the required performances are sufficiently satisfied even in the case of 12.0 kJ/m$^2$ or less.

The resin composition of the present embodiment preferably has a high retention rate of impact resistance relative to the crystallization nucleating agent-free resin composition. When the notched Charpy impact strength, according to ISO-179, of an ISO tensile test piece (4 mm thick) formed from the resin composition of the present embodiment is A, and the notched Charpy impact strength, according to ISO-179, of an ISO tensile test piece (4 mm thick) formed from the crystallization nucleating agent-free resin composition is B, the retention rate of the notched Charpy impact strength (A/B) $\times$ 100 (unit: %) is, for example, 84% or greater, preferably 87% or greater, more preferably 88% or greater, and even more preferably 89% or greater. The upper limit value is ideally 100%, but the required performances are satisfied even in the case of 99% or less.

The various physical property values are measured according to the description of Examples below.

Method of producing resin composition

The resin composition of the present embodiment can be produced by a known method for producing a thermoplastic resin composition.

As one embodiment of the method for producing a resin composition according to the present embodiment, it is preferable to blend and knead the reinforcing material, the inorganic crystallization nucleating agent, and other components to be blended as necessary into the polyamide resin. An example of such a resin composition is a pellet.

Specific examples of the method include a method in which the polyamide resin, the reinforcing material, the inorganic crystallization nucleating agent, and other components to be blended as necessary are mixed in advance using various mixers such as a tumbler and a Henschel mixer, and then the mixture is melt-kneaded with a mixer such as a Banbury mixer, a roll, a Brabender, a single-screw kneading extruder, a twin-screw kneading extruder, or a kneader. In addition, the reinforcing material is preferably supplied from the middle of the extruder for preventing the reinforcing material from being crushed during kneading. Further, two or more types of components selected from the respective components may be mixed and kneaded in advance.

Molded article

The molded product of the present embodiment is formed from the resin composition of the present embodiment.

A method for producing the molded product of the present embodiment is not particularly limited.

For example, the molded product of the present embodiment may be directly molded by various molding methods after the components are melt-kneaded, or may be molded by various molding methods after the components are melt-kneaded and pelletized, and then molten again.

The method for molding the molded product is not particularly limited, and well-known molding methods can be adopted. Examples thereof include an injection molding method, an injection-compression molding method, an extrusion molding method, a profile extrusion method, a transfer molding method, a hollow molding method, a gas-assisted hollow molding method, a blow molding method, extrusion blow molding, an in-mold coating (IMC) molding method, a rotary molding method, a multi-layer molding method, a two-color molding method, an insert molding method, a sandwich molding method, a foaming molding method, and a pressure molding method. The resin composition of the present embodiment is particularly suitably used in a molding method using a mold, such as an injection molding method.

The shape of the molded product of the present embodiment is not particularly limited, and can be selected as appropriate depending on the application and purpose of the molded product. Examples thereof include plate-like, plate-shaped, rod-shaped, sheet-like, film-like, cylindrical, annular-shaped, circular-shaped, oval-shaped, gear-shaped, polygon-shaped, odd-shaped, hollow, frame-shaped, box-shaped, and panel-shaped molded products.

The fields of application of the molded products of the present embodiment are not particularly limited, and the molded products can be widely used in applications such as transport machine components such as automobile components, general machine components, precision machine components, electronic and electrical equipment components, OA equipment components, building materials and building-related components, medical devices, leisure sports goods, gaming devices, medical products, household goods such as food packaging films, and defense and aerospace products.

Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

1. Raw Material

Polyamide Resin

Synthesis Example of MP10 (M/P molar ratio = 80/20)

Sebacic acid was heated and dissolved in a reactor under an atmosphere of nitrogen, and then while a mixture of diamines of meta-xylylenediamine (MXDA) (available from Mitsubishi Gas Chemical Company, Inc.) and para-xylylenediamine (PXDA) (available from Mitsubishi Gas Chemical Company, Inc.) in a molar ratio of 8:2 was gradually added dropwise with stirring the contents under increased pressure (0.35 MPa) to give a molar ratio of the diamines and sebacic acid of about 1:1, the temperature was increased to 235°C. After completion of the dropwise addition, the reaction was continued for 60 minutes, and the amount of components with a molecular weight of 1000 or less was adjusted. After completion of the reaction, the contents were taken out in the form of strands and pelletized with a pelletizer, and a polyamide resin was obtained.

Synthesis Example of MP10 (M/P molar ratio = 70/30)

Sebacic acid was heated and dissolved in a reactor under an atmosphere of nitrogen, and then while a mixture of diamines of meta-xylylenediamine (MXDA) (available from Mitsubishi Gas Chemical Company, Inc.) and para-xylylenediamine (PXDA) (available from Mitsubishi Gas Chemical Company, Inc.) in a molar ratio of 7:3 was gradually added dropwise with stirring the contents under increased pressure (0.35 MPa) to give a molar ratio of the diamines and sebacic acid of about 1:1, the temperature was increased to 235°C. After completion of the dropwise addition, the reaction was continued for 60 minutes, and the amount of components with a molecular weight of 1000 or less was adjusted. After completion of the reaction, the contents were taken out in the form of strands and pelletized with a pelletizer, and a polyamide resin was obtained.

Synthesis Example of MP10 (M/P molar ratio = 50/50)

Sebacic acid was heated and dissolved in a reactor under an atmosphere of nitrogen, and then while a mixture of diamines of meta-xylylenediamine (MXDA) (available from Mitsubishi Gas Chemical Company, Inc.) and para-xylylenediamine (PXDA) (available from Mitsubishi Gas Chemical Company, Inc.) in a molar ratio of 5:5 was gradually added dropwise with stirring the contents under increased pressure (0.35 MPa) to give a molar ratio of the diamines and sebacic acid of about 1:1, the temperature was increased to 260°C. After completion of the dropwise addition, the reaction was continued for 60 minutes, and the amount of components with a molecular weight of 1000 or less was adjusted. After completion of the reaction, the contents were taken out in the form of strands and pelletized with a pelletizer, and a polyamide resin was obtained.

Synthesis Example of MXD10

Sebacic acid was heated and dissolved in a reactor under an atmosphere of nitrogen, and then while meta-xylylenediamine (MXDA) (available from Mitsubishi Gas Chemical Company, Inc.) was gradually added dropwise with stirring the contents under increased pressure (0.35 MPa) to give a molar ratio of the diamines and sebacic acid of about 1:1, the temperature was increased to 240°C. After completion of the dropwise addition, the reaction was continued for 60 minutes, and the amount of components with a molecular weight of 1000 or less was adjusted. After completion of the reaction, the contents were taken out in the form of strands and pelletized with a pelletizer, and a polyamide resin was obtained.

Reinforcing material

GF: T-275H, glass fiber, chopped strand available from Nippon Electric Glass Co., Ltd.

Crystallization nucleating agent types

FG-15: talc, available from Nippon Talc Co., Ltd.
SG2000: talc, available from Nippon Talc Co., Ltd.
PAOG-2: talc, available from Nippon Talc Co., Ltd.
Micron White #5000A: talc, available from Hayashi Kasei Co. Ltd.
Micron White #5000S: talc, available from Hayashi Kasei Co. Ltd.
Adekastab NA-11: organic crystallization nucleating agent, available from ADEKA CORPORATION
SWE: talc, available from Nippon Talc Co., Ltd.

2. Examples 1 to 7, Reference Examples 1 to 4, and Comparative Examples 1 to 7

Compound

The components other than the glass fibers were weighed and dry-blended so as to attain the compositions shown in Tables 1 to 3 below (the components in each table are expressed in parts by mass), and then fed from the screw root of a twin-screw extruder (available from Shibaura Machine Co., Ltd., TEM26SS) using a twin-screw cassette weighing feeder (available from Kubota Corporation, CE-W-1-MP). The glass fibers were fed into the twin-screw extruder from the side of the extruder using a vibratory cassette weighing feeder (CE-V-1B-MP, available from Kubota Corporation), and melt-kneaded with the resin components and the like to obtain pellets of the resin composition. The temperature of the extruder was set to 280°C.

Water absorption rate and dimensional change upon water absorption

The pellets obtained above were dried at 120°C for 4 hours, and then injection-molded into a test piece having a length of 100 mm, a width of 100 mm, and a thickness of 2 mm by an injection-molding machine ("NEX140III" available from Nissei Plastic Industrial Co., Ltd.) under the conditions: a cylinder temperature of 280°C and a mold temperature of 130°C.

The test piece was immersed in ion-exchanged water and allowed to stand at 23°C for one month. The water absorption rate was calculated from the weights of the test piece before and after the test. In addition, the lengths and widths of the test piece were measured before and after the test to evaluate the dimensional change upon water absorption.

$$\text{Water absorption rate} = \text{weight of test piece after} \\ \text{test/weight of test piece before test} \times 100 \; (\text{unit: } \%)$$

$$\text{Dimensional change rate} = (\text{length of test piece after test} \\ - \text{length of test piece before test})/\text{length of test piece before} \\ \text{test} \times 100 \; (\text{unit: } \%)$$

An average value of the dimensional change rate in the longitudinal direction and the dimensional change rate in the lateral direction of the test piece was used as the measured value.

Temperature of deflection under load (HDTUL)

The pellets obtained above were dried at 120°C for 4 hours, and then injection-molded into ISO tensile test pieces (4 mm thick) by an injection-molding machine ("NEX140III" available from Nissei Plastic Industrial Co., Ltd.) under the conditions: a cylinder temperature of 280°C and a mold temperature of 130°C.

In accordance with ISO-75-1, and -2, the above ISO tensile test piece (4 mm thick) was used to measure the temperature of deflection under load under the condition of a bending stress of 1.80 MPa. The temperature of deflection under load was expressed in units of °C.

Charpy impact strength (notched)

The ISO test piece (4 mm thick) was processed in accordance with JIS K 7144 into a notched test piece. For the notched test piece, notched Charpy impact strength (unit: $kJ/m^2$) was measured in accordance with ISO-179. The results are shown in Tables 1 to 3.

In addition, the retention rate of notched Charpy impact strength was calculated as compared with that of the same, but talc-free formulation (crystallization nucleating agent-free resin composition). The amount of talc not added was adjusted by the amount of polyamide resin.

$$\text{Retention rate of notched Charpy impact strength as} \\ \text{compared with that of talc-free resin composition} \\ = (\text{notched Charpy impact strength of talc-added} \\ \text{formulation/notched Charpy impact strength of talc-free} \\ \text{formulation}) \times 100 \; (\text{unit: } \%)$$

For example, Example 2 is compared with Reference Example 1.

Difference in softening temperature as compared with case of crystallization nucleating agent-free resin composition

The pellets obtained above were dried at 120°C for 4 hours, and then injection-molded by an injection-molding machine ("NEX140III" available from Nissei Plastic Industrial Co., Ltd.), under the conditions of a cylinder temperature of 280°C and a mold temperature of 110°C or 150°C, into a three stage plate of 100 mm in length × 60 mm in width having thicknesses of 3 mm (a length of 40 mm), 2 mm (a length of 30 mm), and 1 mm (a length of 30 mm).

The softening temperature (unit: °C) was measured at each of mold temperatures of 110°C and 150°C according to Nano-TA measurement in the central portion of the region having a thickness of 1 mm of the obtained test piece.

The differences in softening temperature (unit: °C) as compared with the crystallization nucleating agent-free resin compositions (Reference Examples 1 to 4) are shown in the table. For example, Example 1 is compared with Reference Example 1.

Analyzer: VESTA available from Anasis Instruments

Condition

 Start temperature: 40°C
 End temperature: 350°C
 Temperature increase rate: 100°C/sec
 Cooling rate: 1000°C/sec
 Data rate: 50 points/sec
 Probe: N200
 Engagement Force (Engage Force): 1.0 kV
 Measurement mode: deflection mode (point analysis)

This is a method of measuring a temperature at which a needle (probe) enters a resin when the needle is brought into contact with the resin and the resin is softened by heating. A higher softening temperature indicates a higher degree of crystallinity of the resin.

Half crystallization time and difference in half crystallization time depending on measurement temperature (depolarization intensity method)

Using the pellets obtained above, a film having a thickness of 100 um was prepared, and the film was sandwiched between cover glasses, heated on a hot plate at 250°C for 3 minutes, and then measured. The half crystallization time was measured at 110°C and 150°C. It can be said that a shorter half crystallization time indicates a higher crystallization rate.

MK-701 available from Kotaki Seisakusho was used as the half crystallization measurement device.

Also, the difference between the half crystallization time measured at 110°C and the half crystallization time measured at 150°C was calculated. It can be said that a smaller difference indicates smaller temperature dependence of the crystallization rate.

[Table 1]

| | | | Example 1 | Example 2 | Example 3 | Example 4 | Example 5 | Example 6 |
|---|---|---|---|---|---|---|---|---|
| Polyamide resin | Polyamide resin types | | MP10 | MP10 | MP10 | MP10 | MP10 | MXD10 |
| | MXDA/PXDA ratio | | 80/20 | 80/20 | 80/20 | 80/20 | 80/20 | 100/0 |
| | Added amount | Parts by mass | 65 | 65 | 65 | 68 | 68 | 65 |
| Reinforcing material | Reinforcing material types | | GF | GF | GF | GF | GF | GF |
| | Added amount | Parts by mass | 30 | 30 | 30 | 30 | 30 | 30 |
| Crystallization nucleating agent | Crystallization nucleating agent types | | FG-15 | SG2000 | PAOG-2 | SG2000 | PAOG-2 | FG-15 |
| | BET area | m²/g | 18 | 40 | 8.5 | 40 | 8.5 | 18 |
| | Added amount | Parts by mass | 5.0 | 5.0 | 5.0 | 2.0 | 2.0 | 5.0 |
| Evaluation Results | | | | | | | | |
| Water absorption rate | | % | 1.06 | 1.03 | 1.05 | 1.07 | 1.09 | 1.04 |
| Dimensional change upon water absorption | | % | 0.09 | 0.08 | 0.09 | 0.09 | 0.09 | 0.08 |
| Temperature of Deflection under load HDTUL | | °C | 176 | 177 | 176 | 175 | 174 | 167 |
| Charpy impact strength (notched) | | kJ/m² | 7.5 | 7.7 | 7.4 | 8.3 | 7.9 | 6.8 |
| Retention rate of notched Charpy impact strength as compared with that of talc-free resin composition | | % | 86 | 89 | 85 | 95 | 91 | 94 |
| Δ softening temperature (110°C) as compared with that of crystallization nucleating agent-free composition | | °C | 6.8 | 6.6 | 5.9 | 4.9 | 4.2 | 4.8 |
| Δ softening temperature (150°C) as compared with that of crystallization nucleating agent-free composition | | °C | 10.6 | 9.0 | 8.3 | 6.9 | 6.0 | 9.3 |
| Half crystallization time (110°C) | | sec | 8.8 | 6.0 | 9.2 | 8.3 | 14.7 | 10.1 |
| Half crystallization time (150°C) | | sec | 15.5 | 10.5 | 20.1 | 14.3 | 29.1 | 20.1 |
| Difference between half crystallization times at 110°C and at 150°C | | sec | 6.7 | 4.5 | 10.9 | 6.0 | 14.4 | 10.0 |

13

(continued)

| | Example 1 | Example 2 | Example 3 | Example 4 | Example 5 | Example 6 |
|---|---|---|---|---|---|---|
| Reference Example for comparison | Reference Example 1 | Reference Example 1 | Reference Example 1 | Reference Example 1 | Reference Example 1 | Reference Example 4 |

[Table 2]

| | | | Example 7 | Reference Example 1 | Reference Example 2 | Reference Example 3 | Reference Example 4 | Comparative Example 1 |
|---|---|---|---|---|---|---|---|---|
| Polyamide resin | Polyamide resin types | | MP10 | MP10 | MP10 | MP10 | MXD10 | MP10 |
| | MXDA/PXDA ratio | | 50/50 | 80/20 | 50/50 | 70/30 | 100/0 | 80/20 |
| | Added amount | Parts by mass | 65 | 70 | 70 | 57.5 | 70 | 65 |
| Reinforcing material | Reinforcing material types | | GF | GF | GF | GF | GF | GF |
| | Added amount | Parts by mass | 30 | 30 | 30 | 42.5 | 30 | 30 |
| Crystallization nucleating agent | Crystallization nucleating agent types | | SG2000 | - | - | - | - | Micron White #5000A |
| | BET area | m2/g | 40 | - | - | - | - | 7.5 |
| | Added amount | Parts by mass | 5.0 | - | - | - | - | 5.0 |
| Evaluation Results | | | | | | | | |
| | Water absorption rate | % | 1.05 | 1.15 | 1.19 | 1.10 | 1.10 | 1.06 |
| | Dimensional change upon water absorption | % | 0.08 | 0.11 | 0.12 | 0.06 | 0.10 | 0.09 |
| | Temperature of deflection under load HDTUL | °C | 216 | 174 | 212 | 178 | 163 | 178 |
| | Charpy impact strength (notched) | kJ/m² | 8.2 | 8.7 | 9.1 | 9.2 | 7.2 | 7.0 |
| | Retention rate of notched Charpy impact strength as compared with that of talc-free resin composition | % | 90 | - | - | - | - | 80 |
| | Δ softening temperature (110°C) as compared with that of crystallization nucleating agent-free composition | °C | 5.3 | - | - | - | - | 6.8 |
| | Δ softening temperature (150°C) as compared with that of crystallization nucleating agent-free composition | °C | 8.8 | - | - | - | - | 10.6 |
| | Half crystallization time (110°C) | sec | 3.5 | 93.2 | 59 | 78.4 | 110.5 | 7.1 |
| | Half crystallization time (150°C) | sec | 5.8 | 18.3 | 12.5 | 14.3 | 28.6 | 9.4 |
| | Difference between half crystallization times at 110°C and at 150°C | sec | 2.3 | 74.9 | 46.5 | 64.2 | 81.9 | 2.3 |

(continued)

|  | | Example 7 | Reference Example 1 | Reference Example 2 | Reference Example 3 | Reference Example 4 | Comparative Example 1 |
|---|---|---|---|---|---|---|---|
| Reference Example for comparison | | Reference Example 2 | | | | | Reference Example 1 |

[Table 3]

| | | | Comparative Example 2 | Comparative Example 3 | Comparative Example 4 | Comparative Example 5 | Comparative Example 6 | Comparative Example 7 |
|---|---|---|---|---|---|---|---|---|
| Polyamide resin | Polyamide resin types | | MP10 | MP10 | MP10 | MP10 | MP10 | MXD10 |
| | MXDA/PXDA ratio | | 80/20 | 80/20 | 80/20 | 70/30 | 70/30 | 100/0 |
| | Added amount | Parts by mass | 65 | 69.5 | 68 | 56,9 | 49.95 | 65 |
| Reinforcing material | Reinforcing material types | | GF | GF | GF | GF | GF | GF |
| | Added amount | Parts by mass | 30 | 30 | 30 | 42.1 | 49.95005 | 30 |
| Crystallization nucleating agent | Crystallization nucleating agent types | | Adekastab NA-11 | FG-15 | SWE | Micron White #5000S | Micron White #5000S | SWE |
| | BET area | $m^2/g$ | - | 18 | 3.5 | 7.5 | 7.5 | 3.5 |
| | Added amount | Parts by mass | 5.0 | 0.5 | 2.0 | 1.1 | 0.100 | 5.0 |
| Evaluation Results | | | | | | | | |
| Water absorption rate | | % | 1.21 | 1.2 | 1.2 | 0.91 | 0.83 | 1.06 |
| Dimensional change upon water absorption | | % | 0.12 | 0.11 | 0.11 | 0.08 | 0.04 | 0.09 |
| Temperature of deflection under load HDTUL | | °C | 173 | 174 | 176 | 178 | 182 | 168 |
| Charpy impact strength (notched) | | $kJ/m^2$ | 8.6 | 8.5 | 7.2 | 8.0 | 9.5 | 6.4 |
| Retention rate of notched Charpy impact strength as compared with that of talc-free resin composition | | % | 99 | 98.0 | 83 | 87 | - | 73 |
| $\Delta$ softening temperature (110°C) as compared with that of crystallization nucleating agent-free composition | | °C | 1.2 | 1.1 | 2.9 | 3.6 | | 5.5 |

(continued)

| | | Comparative Example 2 | Comparative Example 3 | Comparative Example 4 | Comparative Example 5 | Comparative Example 6 | Comparative Example 7 |
|---|---|---|---|---|---|---|---|
| Δ softening temperature (150°C) as compared with that of crystallization nucleating agent-free composition | °C | 0.5 | 0.8 | 4.8 | 5.8 | | 7.9 |
| Half crystallization time (110°C) | sec | 85.4 | 81.5 | 42.6 | 10.6 | 89.2 | 8.8 |
| Half crystallization time (150°C) | sec | 20.1 | 14.5 | 8.8 | 15.3 | 17.3 | 10.5 |
| Difference between half crystallization times at 110°C and at 150°C | sec | 65.3 | 67.0 | 33.8 | 4.7 | 71.9 | 1.7 |
| Reference Example for comparison | | Reference Example 1 | Reference Example 1 | Reference Example 1 | Reference Example 3 | Reference Example 3 | Reference Example 4 |

As is clear from the above results, the resin composition of the present invention was a resin composition in which the half crystallization time was short, the decrease in Charpy impact strength could be effectively suppressed as compared with the case of inorganic crystallization nucleating agent-free resin composition, and further the temperature dependence of the half crystallization time was small (Examples 1 to 7).

On the other hand, when a certain amount or more of the inorganic crystallization nucleating agent was blended, and the area measured according to the specific surface area measurement method (BET method) was 8.0 m$^2$/g or less (Comparative Examples 1, 4 and 7), the retention rate of the Charpy impact strength was low. When the organic crystallization nucleating agent was used (Comparative Example 2), the half crystallization time at the measurement temperature of 110°C was long, and the temperature dependence of the half crystallization time was also large. When the content of the inorganic crystallization nucleating agent was low (Comparative Example 3), the half crystallization time at the measurement temperature of 110°C was long, and the temperature dependence of the half crystallization time was also large.

**Claims**

1. A resin composition comprising a polyamide resin, a reinforcing material, and an inorganic crystallization nucleating agent,

   wherein the polyamide resin comprises a xylylenediamine-based polyamide resin containing diamine-derived structural units and dicarboxylic acid-derived structural units, 70 mol% or greater of the diamine-derived structural units being derived from xylylenediamine, and 70 mol% or greater of the dicarboxylic acid-derived structural units being derived from an $\alpha,\omega$-linear aliphatic dicarboxylic acid having from 4 to 20 carbon atoms;
   the inorganic crystallization nucleating agent has an area measured according to a specific surface area measurement method (BET method) of greater than 8.0 m$^2$/g; and
   a content of the inorganic crystallization nucleating agent is 2.0 mass% or greater of the resin composition.

2. The resin composition according to claim 1, wherein the reinforcing material comprises a glass fiber and/or a carbon fiber.

3. The resin composition according to claim 1 or 2, wherein the content of the inorganic crystallization nucleating agent is 5.0 mass% or greater of the resin composition.

4. The resin composition according to any one of claims 1 to 3, wherein the xylylenediamine comprises from 10 to 70 mol% of para-xylylenediamine and from 90 to 30 mol% of meta-xylylenediamine, provided that the total of para-xylylenediamine and meta-xylylenediamine does not exceed 100 mol%.

5. The resin composition according to any one of claims 1 to 4, wherein the content of the inorganic crystallization nucleating agent is 10.0 mass% or less of the resin composition.

6. The resin composition according to any one of claims 1 to 5, wherein a difference between a half crystallization time of the resin composition at a measurement temperature of 110°C and a half crystallization time of the resin composition at a measurement temperature of 150°C as measured according to a depolarization intensity method is 20.0 seconds or less.

7. A molded product formed from a resin composition described in any one of claims 1 to 6.

## INTERNATIONAL SEARCH REPORT

| International application No. |
| --- |
| **PCT/JP2022/011810** |

### A. CLASSIFICATION OF SUBJECT MATTER

***C08L 77/06***(2006.01)i; ***C08G 69/26***(2006.01)i; ***C08K 3/01***(2018.01)i; ***C08K 3/013***(2018.01)i; ***C08K 3/04***(2006.01)i; ***C08K 7/06***(2006.01)i; ***C08K 7/14***(2006.01)i
FI:    C08L77/06; C08G69/26; C08K3/01; C08K3/013; C08K3/04; C08K7/06; C08K7/14

According to International Patent Classification (IPC) or to both national classification and IPC

### B. FIELDS SEARCHED

Minimum documentation searched (classification system followed by classification symbols)

C08L77/06; C08G69/26; C08K3/01; C08K3/013; C08K3/04; C08K7/06; C08K7/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2002-97363 A (ASAHI KASEI CORP) 02 April 2002 (2002-04-02) claims, examples | 1-7 |
| X | WO 2020/059748 A1 (MITSUBISHI GAS CHEMICAL CO., INC.) 26 March 2020 (2020-03-26) claims, paragraphs [0013]-[0017], [0034], [0037], examples | 1-7 |
| A | JP 2017-14388 A (ASAHI KASEI CORP) 19 January 2017 (2017-01-19) entire text | 1-7 |
| A | JP 2011-63681 A (TOYO BOSEKI) 31 March 2011 (2011-03-31) entire text | 1-7 |
| A | WO 2020/189501 A1 (TOYOBO CO., LTD.) 24 September 2020 (2020-09-24) paragraph [0029] | 1-7 |

☐ Further documents are listed in the continuation of Box C.      ☑ See patent family annex.

| | |
| --- | --- |
| *     Special categories of cited documents: | "T"   later document published after the international filing date or priority date and not in conflict with the application but cited to understand the principle or theory underlying the invention |
| "A"   document defining the general state of the art which is not considered to be of particular relevance | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **04 April 2022** | **19 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/011810**

| Patent document cited in search report | | | Publication date (day/month/year) | Patent family member(s) | | | Publication date (day/month/year) |
|---|---|---|---|---|---|---|---|
| JP | 2002-97363 | A | 02 April 2002 | (Family: none) | | | |
| WO | 2020/059748 | A1 | 26 March 2020 | CN KR | 112739779 10-2021-0060457 | A A | |
| JP | 2017-14388 | A | 19 January 2017 | (Family: none) | | | |
| JP | 2011-63681 | A | 31 March 2011 | (Family: none) | | | |
| WO | 2020/189501 | A1 | 24 September 2020 | (Family: none) | | | |

Form PCT/ISA/210 (patent family annex) (January 2015)

**EP 4 339 245 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019155982 A
- JP 2017014387 A
- WO 2012046629 A
- JP 4894982 B